# EUROPEAN PATENT APPLICATION

(11) **EP 4 825 686 A1**
(43) Date of publication of application: **21.10.2026**
(21) Application number: 25171271.7
(22) Date of filing: 17.04.2025
(51) Int. Cl.: B60W 30/14, B60W 30/18, B60W 40/076, B60W 50/00

(54) **A METHOD OF A CONTROL SYSTEM FOR CONTROLLING A VEHICLE SPEED, A CONTROL SYSTEM, AND A VEHICLE COMPRISING THE CONTROL SYSTEM**

(71) Applicant: Scania CV AB, 151 87 Södertälje (SE)
(72) Inventor: ALENIUS, Mikael, 141 72 Segeltorp (SE); LINDVE, Kristoffer, 141 46 Huddinge (SE)
(74) Representative: Scania CV AB

(57) **Abstract**

A method (200) for controlling a vehicle speed v in at least one curve (620), is presented.

The method comprises:
- predicting (210), when the at least one curve (620) is ahead of the vehicle (500), a reference speed v_{ref} based on:
-- a curvature (621) of the at least one curve (620); and
-- a first sensor information (591) indicating one or more of a first lateral road inclination and at least one first road condition in a road section (610) ahead of the at least one curve (620);

- determining (220), when the vehicle is travelling in the at least one curve (620), an adjusted reference speed v_{rer_adj} based on;
-- the predicted reference speed v_{ref}; and
-- a second sensor information (592) indicating a second lateral road inclination and at least one second road condition in a road section (622) of the at least one curve (620); and

- controlling (230) the vehicle speed v towards the adjusted reference speed v_{ref_adj}.

## Description

### Technical field

The present invention relates to vehicle speed control and more specifically to a method for controlling a vehicle speed when the vehicle travels in at least one curve, to a control system configured for performing the vehicle speed control, and to a vehicle comprising the control system. The present invention also relates to a computer program and a computer-readable medium executing the method.

### Background

The following background description constitutes a description of the background to the present invention, which does not, however, necessarily have to constitute prior art.

Vehicles of today are often equipped with a speed/cruise control system, which is configured to control the speed of the vehicle. The driver of the vehicle choses a set speed, and the speed/cruise control system then controls the vehicle speed based on this set speed and possibly also based on other parameters, such that a good fuel or energy economy, i.e. a low fuel or energy consumption, is provided for the vehicle.

There are today many types of speed/cruise control systems, in which various kinds of information/parameters are utilized as a basis for the control of the vehicle speed. Generally, the speed/cruise control systems of today are designed to provide a more fuel or energy efficient vehicle speed control than a driver would be able to provide by manually controlling the speed of the vehicle. The modern speed/cruise control systems may for example have access to additional information which is unknown to the driver, such as slope/inclination angles and/or information related to parameters not being visible for the driver, e.g. road properties behind crests or curves. Such additional information may be utilized for more efficiently controlling the vehicle speed.

### Brief description of the invention

When driving in curves with an activated speed/cruise control system, the resulting vehicle speed provided by the speed/cruise control function may be too high for the driver to feel comfortable. One reason for this may be that not all information related to the road is available for the speed/cruise control system when it determines the vehicle speed to hold when travelling in the curves.

For example, if the road banks in an outward direction of a curve, i.e. if there is a lateral inclination of the road outwards in the curve, the vehicle speed being provided by the speed/cruise control system might feel too high for the driver of the vehicle. A too high vehicle speed in outwards inclined curves may in some cases cause a tipping risk for the vehicle. Therefore, also a relatively high speed may result in discomfort for the driver. Further, for certain types of roads, for example dirt or gravel roads, or for low quality roads, the vehicle speed being provided by the speed/cruise control system may be too high for the driver.

Thus, the driver may be uncomfortable when travelling at the regulated vehicle speed. If the driver is uncomfortable at the regulated vehicle speed, a natural reaction would be to deactivate the speed/cruise control function, e.g. by braking the vehicle or by actively turning the speed/cruise control function off.

If the speed/cruise control function is deactivated, the fuel or energy consumption generally increases, since it is difficult for a driver to manually control the vehicle speed as efficiently as the speed/cruise control systems of today can control it. Also, by actively and unnecessary braking the vehicle, kinetic energy is almost always wasted.

It is therefore an objective of the present invention to provide a vehicle speed control such that these problems are at least partly solved.

According to a first aspect of the present invention, the objective is achieved through a method of method of a control system for controlling a vehicle speed v of a vehicle when the vehicle travels in at least one curve,
the method comprising:
- predicting, when the at least one curve is ahead of the vehicle, a reference speed v_{ref} towards which the vehicle speed v is to be controlled in the at least one curve, wherein the reference speed v_{ref} is predicted based on:
   -- a curvature of the at least one curve, wherein the curvature is determined based on positioning information and map data; and
   -- a first sensor information provided by at least one first sensor of the vehicle, wherein the first sensor information indicates one or more of a first lateral road inclination and at least one first road condition experienced by the vehicle in a road section ahead of the at least one curve;
- determining, when the vehicle is travelling in the at least one curve, an adjusted reference speed v_{ref_adj} based on:
   -- the predicted reference speed v_{ref}; and
   -- a second sensor information provided by at least one second sensor of the vehicle, wherein the second sensor information indicates a second lateral road inclination and at least one second road condition experienced by the vehicle in a road section of the at least one curve; and
- controlling, when the vehicle is travelling in the road section of the at least one curve, the vehicle speed v towards the adjusted reference speed v_{ref_adj}.

Taking the lateral inclination of the road in the curve into account when controlling the vehicle speed considerably reduces the tipping risk for the vehicle, i.e. reduces the risk for the vehicle tiling outwards in the curve.

By taking the lateral road inclination and the road conditions both before the at least one curve and also in the at least one curve into consideration when determining the adjusted reference speed v_{ref_adj}, towards which the vehicle speed v is controlled, a possible discomfort of the driver when approaching the curve and also when travelling through the curve is also taken into account by the presented method. Hereby, the risk for the driver deactivating the speed control function/system in a curve, e.g. by pressing the brake pedal, is considerably reduced.

For example, if there is a lateral inclination outwards in the curve and/or if the road quality or poor, e.g. if the road has low friction, holes or bumps in the curve, the driver might feel that the vehicle speed normally controlled by the speed control system is too high. This may cause discomfort or even anxiety for the driver of the vehicle. There is therefore a risk that the driver manually deactivates the speed control function/system due to the experienced discomfort. As mentioned above, a manually controlled vehicle speed often results in an increased fuel or energy consumption, since it is almost impossible for a driver to manually regulate the vehicle speed as efficiently as modern speed control systems do. Also, if the driver actively brakes the vehicle, kinetic energy is wasted by the braking.

Detailed map data is today available for large parts of the road network. The map data is very accurate regarding the curvature of the road. The map data may be periodically updated such that it is up to date. Together with positioning information, such as e.g. global positioning system (GPS) information, the curvature of the road may be accurately and efficiently detected/determined.

However, information related to the lateral road inclination is normally not available in map data of today. Information related to the quality of the road, such as surface friction, holes and/or bumps in the road, is normally also not available in map data of today. The herein presented speed control, which is based on the first sensor information sensed before the curve and also on the second sensor information sensed in the curve, is based on more information than conventional cruise/speed control systems base their speed control on. Hereby, a more exact vehicle speed control, which imitates, or at least resembles, the speed control of a human driver when driving in curves, is provided.

The herein presented vehicle speed control may for example reduce the vehicle speed further in the curve if the road conditions deteriorate in the curve, e.g. if an outward lateral inclination and/or poor quality start in the curve. However, if the road improves in the curve, e.g. if an outward lateral inclination before the curve is changed to an inward lateral inclination and/or if the road quality improves in the curve, the vehicle speed may be less reduced in the curve. Hereby, the vehicle is controlled in a way that the driver himself would control it.

Hereby, the herein presented vehicle speed control improves the driver comfort and thereby reduces the risk for deactivation of the speed control function/system. Thus, the driver feels safe and comfortable, since the vehicle speed is controlled in a way similar to how the driver would manually control the speed in this situation. The driver will therefore continue to let the speed control function/system control the vehicle speed. It is thus prevented that the driver deactivates or overrides the speed control function/system by pressing the brake pedal or the accelerator pedal of the vehicle.

Hereby, an overall reduced, or at least non-increased, fuel or energy consumption is provided for the curved road section.

According to an embodiment, each of the at least one first road condition and the at least one second road condition comprises one or more in the group of:
- a road type;
- a road quality;
- a road friction; and
- an evenness of the road.

Hereby, the road quality through the at least one curve is efficiently taken into consideration when determining the adjusted reference speed v_{ref_adj}, towards which the vehicle speed v is controlled. To determine the adjusted reference speed v_{ref_adj} like this, such that the exact and current road conditions existing in the curve are taken into consideration, is a low complex approach to improve the comfort of the driver when travelling through curves.

According to an embodiment, each of the at least one first sensor and the at least one second sensor comprises one or more in the group of:
- an accelerometer;
- at least one gyro sensor;
- at least one rotational speed sensor arranged on at least one wheel pair;
- at least one air suspension system sensor;
- a camera;
- a precipitation sensor; and
- a thermometer.

Thus, the herein presented control of the vehicle speed may be performed based on information provided by one or more of a large number of onboard sensors, of which many are standard equipment in moderns vehicles, and may therefore be easily implemented in essentially any vehicle of today. Information provided by one or more onboard sensors is always available in the vehicle, also if there is no communication system coverage at the position where the vehicle is travelling, such as e.g. at the countryside, in remote woods or in tunnels.

According to an embodiment, the at least one second sensor is the same as the at least one first sensor.

Hereby, a low-cost and low-complexity implementation is possible.

According to an embodiment,
- the prediction of the reference speed v_{ref} is performed when the vehicle is travelling in the road section ahead of the at least one curve; and
- the road section ahead of the at least one curve ends with a beginning of the at least one curve.

Hereby, the first sensor information provided by at least one first sensor for the road before the curve is used as a basis for the prediction of the reference speed v_{ref}. Often, a lateral inclination before the curve continues into the curve as well. Also, a road quality before the curve often continues into the curve. **The** predicted reference speed v_{ref} will therefore often provide a solid basis for an efficient and good speed control in the curve.

According to an embodiment,
- the determination of the adjusted reference speed v_{ref_adj} is performed when the vehicle is travelling in the road section of the at least one curve; and
- the road section of the at least one curve ends with a sharpest point of the at least one curve.

Hereby, the second sensor information provided by at least one second sensor for the road within the curve is used as a basis for the determination of the adjusted reference speed v_{ref_adj}.Sometimes, a lateral inclination of the road changes within the curve. Also, a road quality may also change within the curve. **The** determined adjusted reference speed v_{ref_adj}, takes such changes within the curve into account, and will therefore provide an exact and accurate basis for the speed control in the curve.

According to an embodiment, wherein the determination of the adjusted reference speed v_{ref_adj} comprises:
- determining an adjustment factor af, which is to be multiplied with the reference speed v_{ref} to provide the adjusted reference speed v_{ref_adj}.

**To** determine the adjusted reference speed v_{ref_adj} based on the reference speed v_{ref} and an adjustment factor af to be multiplied with the reference speed v_{ref} is efficient and adds little complexity to the vehicle control system.

According to an embodiment, one or more of the prediction of the reference speed v_{ref} and the determination of the adjusted reference speed v_{ref_adj} are repeatably performed with a time interval between each repetition.

Hereby, the vehicle speed is always controlled towards a current and up to date predictions of the reference speed v_{ref} and determinations of the adjusted reference speed v_{ref_adj}. Thus, an accurate and reliable vehicle speed control is provided, which is constantly adapted to the current road conditions.

According to an embodiment, the time interval has a length in the group of:
- 0.5 to 5 seconds;
- 2 seconds; and
- 1 second.

**The** time interval between the predictions of the reference speed v_{ref} and determinations of the adjusted reference speed v_{ref_adj} may hereby be chosen such that the vehicle speed control is adapted to the currently travelled road, and such that the computational complexity is not unnecessarily increased.

According to an embodiment, the prediction of the reference speed v_{ref} results in a lower value for the reference speed v_{ref} if the first sensor information indicates one or more in the group of:
- the road section ahead of the at least one curve has a lateral road inclination in an outward direction of the at least one upcoming curve;
- the road section ahead of the at least one curve is a dirt road;
- the road section ahead of the at least one curve is a gravel road;
- the road section ahead of the at least one curve comprises one or more holes;
- the road section ahead of the at least one curve is comprises one or more areas with reduced friction; and
- the road section ahead of the at least one curve comprises one or more bumps.

The reference speed v_{ref} is hereby predicted before the curve similar to how the driver would control the vehicle himself, and the risk for deactivation of the vehicle speed control is reduced.

According to an embodiment, the adjusted reference speed v_{ref_adj} is determined to be lower than the predicted reference speed v_{ref} if the second sensor information indicates one or more in the group of:
- the road section of the at least one curve has a lateral road inclination in an outward direction of the at least one upcoming curve;
- the road section of the at least one curve is a dirt road;
- the road section of the at least one curve is a gravel road;
- the road section of the at least one curve comprises one or more holes;
- the road section of the at least one curve comprises one or more areas with reduced friction; and
- the road section of the at least one curve comprises one or more bumps.

The adjusted reference speed v_{ref_adj} is here determined based on a combination of the reference speed v_{ref} predicted before the curve and the lateral inclination and/or the road quality within the curve. If the second sensor information indicates that the lateral inclination and/or the road quality within the curve is worse than they were before the curve, i.e. if they have deteriorated further, then the adjusted reference speed v_{ref_adj} is determined to be lower than the predicted reference speed v_{ref}.This results in a control of the vehicle speed being similar to how the driver would control the vehicle himself, and the risk for deactivation of the vehicle speed control is reduced.

According to an embodiment, the adjusted reference speed v_{ref_adj} is determined to be higher than the predicted reference speed v_{ref} if the second sensor information indicates one or more in the group of:
- a lateral road inclination in an outward direction being present in the road section ahead of the at least one curve ceases to exist in the road section of the at least one curve;
- a flat road section ahead of the at least one curve is altered to have a lateral road inclination in an inward direction in the road section of the at least one curve;
- the road section of the at least one curve ceases to be a dirt road;
- the road section of the at least one curve ceases to be a gravel road;
- one or more holes being present in the road section ahead of the at least one curve ceases to exist in the road section of the at least one curve;
- one or more areas with reduced friction being present in the road section ahead of the at least one curve ceases to exist in the road section of the at least one curve; and
- one or more bumps being present in the road section ahead of the at least one curve ceases to exist in the road section of the at least one curve.

The adjusted reference speed v_{ref_adj} is here determined based on a combination of the reference speed v_{ref} predicted before the curve and the lateral inclination and/or the road quality within the curve. If the second sensor information indicates that the lateral inclination and/or the road quality within the curve is better than they were before the curve, i.e. if they have improved, then the adjusted reference speed v_{ref_adj} is determined to be higher than the predicted reference speed v_{ref}.This results in a control of the vehicle speed being similar to how the driver would control the vehicle himself, and the risk for deactivation of the vehicle speed control is reduced.

According to a second aspect of the present invention, the objective is achieved through a control system configured to control a vehicle speed v of a vehicle when the vehicle travels in at least one curve, wherein the control system is configured to:
- predict, when the at least one curve is ahead of the vehicle, a reference speed v_{ref} towards which the vehicle speed v is to be controlled in the at least one curve, wherein the reference speed v_{ref} is predicted based on:
   -- a curvature of the at least one curve, wherein the curvature is determined based on positioning information and map data; and
   -- a first sensor information provided by at least one first sensor of the vehicle, wherein the first sensor information indicates one or more of a first lateral road inclination and at least one first road condition experienced by the vehicle in a road section ahead of the at least one curve;

- determine, when the vehicle is travelling in the at least one curve, an adjusted reference speed v_{ref_adj} based on:
   -- the predicted reference speed v_{ref}; and
   -- a second sensor information provided by at least one second sensor of the vehicle, wherein the second sensor information indicates a second lateral road inclination and at least one second road condition experienced by the vehicle in a road section of the at least one curve; and
- control, when the vehicle is travelling in the road section of the at least one curve, the vehicle speed v towards the adjusted reference speed v_{ref_adj}.

The control system has corresponding advantages as mentioned for the method according to the first aspect.

According to a third aspect of the present invention, the objective is achieved through a vehicle comprising a herein described control system.

The vehicle has corresponding advantages as mentioned for the method according to the first aspect.

According to a fourth aspect, the invention relates to a computer program comprising instructions which, when the program is executed by a computer, cause the computer to carry out the herein described methods.

The computer program has corresponding advantages as mentioned for the method according to the first aspect.

According to a fifth eleventh, the invention relates to a computer-readable medium comprising instructions which, when executed by a computer, cause the computer to carry out the herein described methods.

The computer-readable medium has corresponding advantages as mentioned for the method according to the first aspect.

It will be appreciated that all the embodiments described for the method aspect of the invention are applicable also to one or more of the control system aspect, the vehicle aspect, the computer program aspect and the computer-readable medium aspect of the invention. Thus, all the embodiments described for the method aspect of the invention may be performed/implemented by the herein described control system, vehicle, computer program and/or the computer-readable medium. The control system may also be a processing device, i.e. a device. The control system aspect, the vehicle aspect, the computer program aspect and the computer-readable medium aspect, and their embodiments, have advantages corresponding to the advantages mentioned above for the method and its embodiments.

### Brief list of figures

Embodiments of the invention will be illustrated in more detail below, along with the enclosed drawings, where similar references are used for similar parts, and where:
Figure 1 schematically illustrates an example vehicle, in which aspects and/or embodiments of the present invention may be implemented,
Figure 2 shows a flow chart diagram for a method of a control system for controlling a vehicle speed v of a vehicle according to some aspects and/or embodiments of the present invention,
Figures 3 schematically illustrate a non-limiting driving example at which herein presented aspects and/or embodiments of the present invention may be utilized, and
Figure 4 schematically illustrates a control unit according to various embodiments of the present invention.

### Description of preferred embodiments

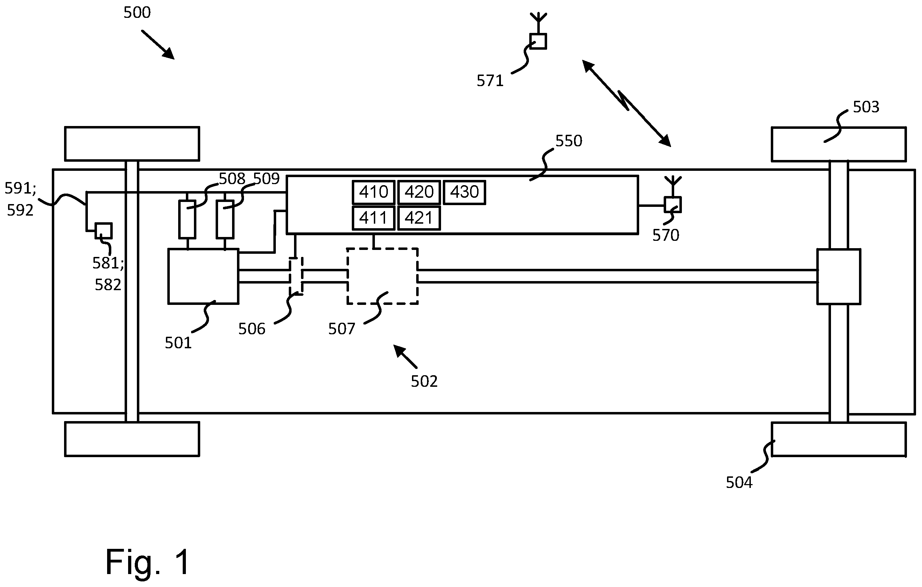

Figure 1 schematically shows an exemplary heavy vehicle 500. This example vehicle 500 will be used to explain the herein presented solution and its aspects and embodiments. The aspects and embodiments are, however, not limited to use in vehicles as the ones shown in figure 1, but may also be used in essentially any other type of vehicle.

The vehicle 500 comprises multiple wheels, of which at least one pair of drive wheels 503, 504. The truck 500 furthermore comprises at least one powertrain 502 configured to transfer a torque between at least one power source 501, such as e.g. a combustion engine, at least one electric machine, or a combination of a combustion engine and at least one electric machine, implementing a so-called hybrid drive, to the at least one pair of drive wheels 503, 504. The combustion engine is provided with fuel from a fuel tank 508. The at least one electric machine is provided with electrical energy from at least one energy storage 509, e.g. a battery pack, coupled to the at least one electric machine.

The powertrain 502, and its components, is controlled by at least one control unit/device/system 550. The at least one second energy storage 509 may also be controlled by a control unit/device/system 550.

The torque provided by the at least one power source 501 may be provided to the at least one pair of drive wheels 503, 504 via a central gear, such as e.g. a customary differential, and drive shafts connected with the central gear. One or more electric machines may also be arranged essentially anywhere in the vehicle 500, as long as the produced torque is provided to the drive wheels 503, 504, e.g. adjacent to one or more of the drive wheels 503, 504, as is understood by a skilled person.

The vehicle 500 may be braked by utilizing the at least one power source 501, i.e. by utilizing regenerative braking or motor braking. The vehicle 500 may further include at least one braking arrangement arranged at each one of the wheels of the vehicle, where the at least one braking arrangement may be included in a braking system.

If the at least one power source 501 comprises a combustion engine, the powertrain 502 of the vehicle 500 may comprise a clutch 506 and a gearbox 507 for providing the torque to the central gear. However, if the at least one power source 501 does not comprise a combustion engine, the clutch 506, and possibly also the gearbox 507, may be omitted in the powertrain 502 of the vehicle 500.

The power source 501, is controlled by a speed/cruise control system, which may be comprised/implemented in the control unit/device/system 550 of the vehicle 500, such that the vehicle speed v of the vehicle 500 is controlled.

In figure 1, only the units/devices/entities of the vehicle being useful for understanding the present invention are schematically illustrated. Not all illustrated components have to be comprised in the vehicle, depending on the implementation of the present invention. Further, the control unit/device/system 550 is in figure 1 illustrated as one single unit/device/system. However, as is understood by a skilled person, the control unit/device/system 550 may be implemented by utilization of essentially any number of units/devices/systems.

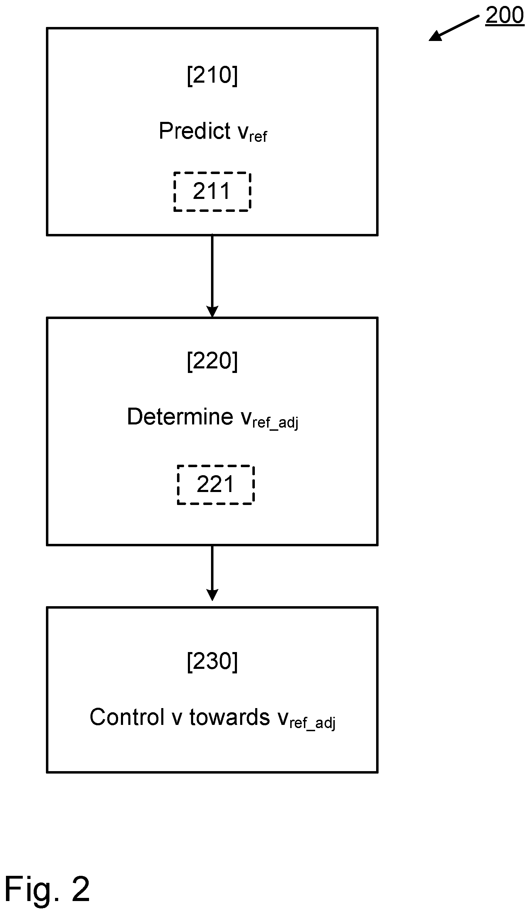

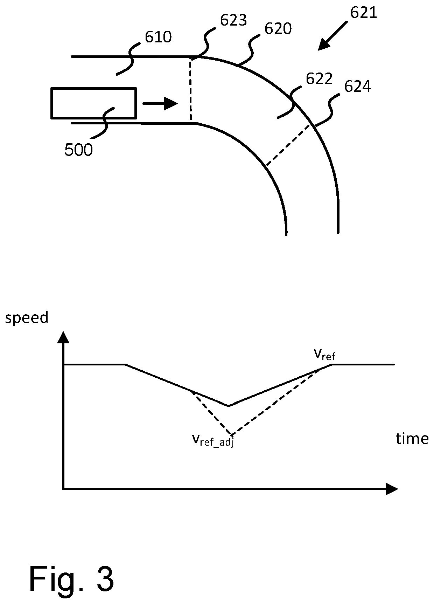

Figure 2 shows a flow chart diagram for a method 200 for controlling a vehicle speed v of a vehicle 500 when the vehicle 500 travels in at least one curve 620, as illustrated in figure 3, according to some aspects and/or embodiments. The method increases the driver comfort in the curve 620,as is explained below.

In a first step 210 of the method 200, which is performed when the at least one curve 620 is still ahead of the vehicle 500, a reference speed v_{ref} towards which the vehicle speed v is to be controlled in the at least one curve, is predicted. The reference speed v_{ref} is predicted 210 based on a curvature 621 of the at least one curve 620, which is determined 211 based on positioning information and map data. The positioning information may for example be global positioning system (GPS) information, which is very accurate and exact. The map data may comprise digital map information, which is very detailed and accurate for most countries and/or regions. The reference speed v_{ref} is predicted 210 based also on a first sensor information 591 provided by at least one first sensor 581 of the vehicle 500, illustrated in figure 1. The first sensor information 591 indicates one or more of a first lateral road inclination and at least one first road condition experienced by the vehicle 500 in a road section 610 ahead of the at least one curve 620.

If, for example, the road has a lateral inclination in one direction in the road section 610 ahead of the at least one curve 620, it is likely that the road will also have a lateral inclination in the same direction in the upcoming at least one curve 620. Also, if the road is of a particular type and/or quality in the road section 610 ahead of the at least one curve 620, it is likely that the road will also have that same or corresponding type and/or quality in the upcoming at least one curve 620. Therefore, when the reference speed v_{ref} is predicted 210 based on the first sensor information 591 provided by at least one first sensor 581 of the vehicle 500, the risk that the driver may feel uncomfortable when travelling at the regulated vehicle speed through the at least one curve is reduced.

In a second step 220 of the method 200, which is performed when the vehicle is travelling in the at least one curve 620, an adjusted reference speed v_{ref_adj} is determined based on the predicted reference speed v_{ref}, and a second sensor information 592 provided by at least one second sensor 582 of the vehicle 500, illustrated in figure 1. The second sensor information 592 indicates a second lateral road inclination and at least one second road condition experienced by the vehicle in a road section 622 of the at least one curve 620.

When determining 220 the adjusted reference speed v_{ref_adj} based the second lateral road inclination and the at least one second road condition experienced by the vehicle in the road section 622 of the at least one curve 620, the determined adjusted reference speed v_{ref_adj} takes into account also the specific features of the road experienced by the vehicle 500 in the at least one curve 620. Hereby, the risk that the driver may feel uncomfortable when travelling at the regulated vehicle speed is considerably reduced, since this is how an experienced driver would control the vehicle speed himself.

If, for example, a lateral inclination outwards starts or increases in the road section 622 of the at least one curve 620, the adjusted reference speed v_{ref_adj} is determined 220 to be lower than the reference speed v_{ref}.Also, if a particular road type, such as a dirt or gravel road, starts in the road section 622 of the at least one curve 620 and/or if a quality of the road deteriorates in the road section 622 of the at least one curve 620, then the adjusted reference speed v_{ref_adj} is determined 220 to be lower than the reference speed v_{ref}.Hereby, the vehicle speed is regulated as a driver would himself regulate the vehicle speed by manual control if the road gets worse in the curve.

In a third step 230 of the method 200, which is performed when the vehicle is travelling in the road section 622 of the at least one curve 620, the vehicle speed v is controlled towards the adjusted reference speed v_{ref_adj}. The determined 220 adjusted reference speed v_{ref_adj} is thus used as a basis for the control 230 of the vehicle speed v. The risk that the driver may feel uncomfortable when travelling in the at least one curve is therefore considerably reduced.

It should be noted that the method steps of figure 2 may be performed in another order than illustrated in figure 2, as long as the information needed for performing a method step is available when the step is to be performed.

One non-limiting example of such a control of the vehicle speed is schematically illustrated in figure 3 for a vehicle 500 travelling on an example road comprising a first straight road section 610 followed by a curve section 620. In the speed diagram, the solid line reference speed v_{ref} has an initial value, for example corresponding to a set speed vₛₑₜ chosen by the driver, which is reduced in the curve 620, and is then raised again after the curve 620, for example back to its initial value. **If,** for example, the road has a lateral inclination outwards and/or is of poor quality in a road section 610 ahead of the at least one curve 620, the reference speed v_{ref} is predicted to have a lower value in the curve 620. I.e. the reference speed v_{ref} is the further reduced in relation to the set speed vₛₑₜ to lower the vehicle speed further in the curve 620.

As illustrated in figure 3, the vehicle speed v is controlled 230 towards the adjusted reference speed v_{ref_adj}, illustrated with dashed lines, which differs from the reference speed v_{ref}, illustrated with solid lines, if for example the lateral inclination and/or the quality of the road changes in the road section 622 of the at least one curve 620, as compared to the lateral inclination and/or the quality of the road in the road section 610 before the curve 620. The vehicle speed v will here thus essentially correspond to the dashed line of the adjusted reference speed v_{ref_adj}, and will be reduced more than the reference speed v_{ref} if for example an outwards lateral inclination increases and/or if the quality of the road deteriorates in the road section 622 of the at least one curve 620. When the vehicle 500 has passed a sharpest point 624, also called apex, of the curve 620, and/or if the outwards lateral inclination decreases and/or if the quality of the road improves, the vehicle speed v may be controlled to increase towards the reference speed v_{ref} again. The acceleration of the vehicle speed v towards the reference speed v_{ref} may then be more or less aggressively performed, depending on the situation.

According to an embodiment, the at least one first road condition comprises a road type, such as for example an asphalt road, a gravel road or a dirt road, a road quality, such as holes in the road, a road friction, such as iced portion or water puddles on the road surface, and/or an evenness of the road, such as bumps on the road.

According to an embodiment, the at least one second road condition correspondingly comprises a road type, a road quality, a road friction, and/or an evenness of the road.

According to an embodiment, the at least one first onboard sensor 581 comprises an accelerometer, at least one gyro sensor, at least one rotational speed sensor arranged on at least one wheel pair, at least one air suspension system sensor, a camera, a precipitation sensor, configured for sensing e.g. rain or snow, and/or a thermometer. Hereby, a first lateral road inclination and/or at least one first road condition experienced by the vehicle 500 in a road section 610 ahead of the at least one curve 620 may be sensed.

According to an embodiment, the at least one second onboard sensor 582 comprises an accelerometer, at least one gyro sensor, at least one rotational speed sensor arranged on at least one wheel pair, at least one air suspension system sensor, a camera, a precipitation sensor, and/or a thermometer. Hereby, a second lateral road inclination and at least one second road condition experienced by the vehicle in a road section 622 of the at least one curve 620 may be sensed.

According to various embodiments, the at least one second sensor 582 may be a different sensor than the at least one first sensor 581, or may be the same sensor as the at least one first sensor 581.

According to some embodiments, the first sensor information 591 and/or second sensor information 592 may also at least partially be provided by utilizing vehicle-to-everything (V2X) information. Thus, determinations and/or observations made by e.g. other vehicles and/or systems may be taken advantage of for predicting 210 the reference speed v_{ref} and/or for determining 220 the adjusted reference speed v_{ref_adj}. For example, if a lateral inclination or a quality of the road in a curve has already been determined by another vehicle having travelled through the curve at an earlier time instant, this determined lateral inclination or quality may be transmitted to, and utilized by, the vehicle when it subsequently travels through the same curve. A communication entity 570 of the vehicle (illustrated in figure 1) may then be configured to communicate with an offboard entity 571, such as another vehicle or an infrastructure entity, in order to receive and/or transmit such vehicle-to-everything (V2X) information from or to the offboard entity 571.

According to an embodiment, schematically illustrated in figure 3, the road section 610 ahead of the at least one curve 620 ends with a beginning 623 of the at least one curve 620. As mentioned above, the prediction 210 of the reference speed v_{ref} is performed when the vehicle 500 is travelling in the road section 610 ahead of the at least one curve, i.e. is performed before the vehicle 500 reaches the beginning 623 of the at least one curve 620, based on the first sensor information 591 sensed in that road section 610.

Further, the road section 622 of the at least one curve 620 ends with a sharpest point 624, also called apex, of the at least one curve 620. Thus, the road section 622 of the at least one curve 620 extends from its beginning 623 to its sharpest point 624. As mentioned above, the determination 220 of the adjusted reference speed v_{ref_adj} is performed when the vehicle 500 is travelling in the road section 622 of the at least one curve 620, based on the second sensor information 592 sensed in that road section 622.

According to an embodiment, the above described determination 220 of the adjusted reference speed v_{ref_adj} comprises a step of determining 221 an adjustment factor af, which is to be multiplied with the reference speed v_{ref} to provide the adjusted reference speed v_{ref_adj}.Thus, after the adjustment factor af has been determined, the adjusted reference speed v_{ref_adj} may be easily determined as a multiplication of the adjustment factor af and the reference speed v_{ref} ; v_{ref_adj} = af*v_{ref}.

According to an embodiment, the prediction 210 of the reference speed v_{ref} is repeatably performed with a time interval between each repetition. The time interval may be e.g. 0.5 to 5 seconds, 2 seconds, or 1 second. Thus, for example, once every second, a new value for the reference speed v_{ref} is predicted 210. The first sensor information 591, on which these predictions 210 are based, may be sensed over longer time periods, and may comprise averaged, filtered, and/or otherwise manipulated sensed values. Each of the predictions 210 is thus based on the first sensor information 591 currently being available when that prediction 210 is made.

According to an embodiment, the determination 220 of the adjusted reference speed v_{ref_adj} is repeatably performed with a time interval, e.g. of 0.5 to 5 seconds, 2 seconds, or 1 second, between each repetition. The second sensor information 592, on which these determinations 220 are based, may be sensed over longer time periods, and may comprise averaged, filtered, and/or otherwise manipulated sensed values. Each of the determinations 220 is thus based on the second sensor information 592 currently being available when that determination 220 is made.

According to an embodiment, the prediction 210 of the reference speed v_{ref} results in a lower value for the reference speed v_{ref} if the first sensor information 591 indicates that the road section 610 ahead of the at least one curve 620 has a lateral road inclination in an outward direction of the at least one upcoming curve 620, if the first sensor information 591 indicates that the road section 610 is a dirt road, if the first sensor information 591 indicates that the road section 610 is a gravel road, if the first sensor information 591 indicates that the road section 610 comprises one or more holes, if the first sensor information 591 indicates that the road section 610 comprises one or more areas with reduced friction, and or if the first sensor information 591 indicates that the road section 610 comprises one or more bumps. Thus, for such a road section 610 ahead of the at least one curve 620, a lower value for the reference speed v_{ref} is predicted 210, as compared to for example a curved high quality asphalt road.

According to an embodiment, the determination 220 of the adjusted reference speed v_{ref_adj} results in a lower the adjusted reference speed v_{ref_adj} than the predicted reference speed v_{ref} if the second sensor information 592 indicates that the road section 622 of the at least one curve 620 has a lateral road inclination in an outward direction of the at least one upcoming curve 620, if the second sensor information 592 indicates that the road section 622 is a dirt road, if the second sensor information 592 indicates that the road section 622 is a gravel road, if the second sensor information 592 indicates that the road section 622 comprises one or more holes, if the second sensor information 592 indicates that the road section 622 comprises one or more areas with reduced friction, if the second sensor information 592 indicates that the road section 622 comprises one or more bumps. Thus, for such a road section 622 of the at least one upcoming curve 620, in which a lateral road inclination occurs or increases and/or in which the road quality deteriorates, the adjusted reference speed v_{ref_adj} is further reduced in relation to the predicted reference speed v_{ref} based on the second sensor information 592, in order to improve the driver comfort.

According to an embodiment, the adjusted reference speed v_{ref_adj} is determined 220 to be higher than the predicted reference speed v_{ref} if the second sensor information 592 indicates that a lateral road inclination in an outward direction being present in the road section 610 ahead of the at least one curve 620 ceases to exist in the road section 622 of the at least one curve 620, or if a flat road section 610 ahead of the at least one curve 620 is altered to have a lateral road inclination in an inward direction in the road section 622 of the at least one curve 620. Thus, if the lateral road inclination is reduced in the road section 622, or is altered to instead be directed in an inwards direction, then the adjusted reference speed v_{ref_adj} may be higher than the reference speed v_{ref}, because the drivability in the at least one curve 620 is improved as indicated by the sensed inclination value.

Further, if the road section 622 of the at least one curve 620 ceases to be a dirt road or a gravel road, i.e. if the road section 610 ahead of the at least one curve 620 is a dirt road or a gravel road, which ends in the road section 622 of the at least one curve 620, then the adjusted reference speed v_{ref_adj} is determined 220 to be higher than the predicted reference speed v_{ref}.

If one or more holes being present in the road section 610 ahead of the at least one curve 620 ceases to exist in the road section 622 of the at least one curve 620, i.e. if the quality of the road improves in the road section 622 of the at least one curve 620, then the adjusted reference speed v_{ref_adj} is determined 220 to be higher than the predicted reference speed v_{ref}.

**If** one or more areas with reduced friction being present in the road section 610 ahead of the at least one curve 620 ceases to exist in the road section 622 of the at least one curve 620, i.e. if the friction improves in the road section 622 of the at least one curve 620, then the adjusted reference speed v_{ref_adj} is determined 220 to be higher than the predicted reference speed v_{ref}.

**If** one or more bumps being present in the road section 610 ahead of the at least one curve 620 ceases to exist in the road section 622 of the at least one curve 620, i.e. if the road becomes more even in the road section 622 of the at least one curve 620, then the adjusted reference speed v_{ref_adj} is determined 220 to be higher than the predicted reference speed v_{ref}.

According to an aspect, a control system 550 configured to control a vehicle speed v of a vehicle 500 when the vehicle 500 travels in at least one curve 620 is presented. **The** control system 550 is configured to predict 210, when the at least one curve 620 is ahead of the vehicle 500, a reference speed v_{ref} towards which the vehicle speed v is to be controlled in the at least one curve, wherein the reference speed v_{ref} is predicted 210 based on:
- a curvature 621 of the at least one curve 620, wherein the curvature 621 is determined 211 based on positioning information and map data; and
- a first sensor information 591 provided by at least one first sensor 581 of the vehicle 500, wherein the first sensor information 591 indicates one or more of a first lateral road inclination and at least one first road condition experienced by the vehicle 500 in a road section 610 ahead of the at least one curve 620.

**The** control system 550 is further configured to determine 220, when the vehicle is travelling in the at least one curve 620, an adjusted reference speed v_{ref_adj} based on:
- the predicted reference speed v_{ref}; and
- a second sensor information 592 provided by at least one second sensor 582 of the vehicle 500, wherein the second sensor information 592 indicates a second lateral road inclination and at least one second road condition experienced by the vehicle in a road section 622 of the at least one curve 620.

The control system 550 is also configured to control 230, when the vehicle is travelling in the road section 622 of the at least one curve 620, the vehicle speed v towards the adjusted reference speed v_{ref_adj}.

The control system 550 is thus configured for performing the herein described method 200, i.e. to perform the herein described aspects and embodiments.

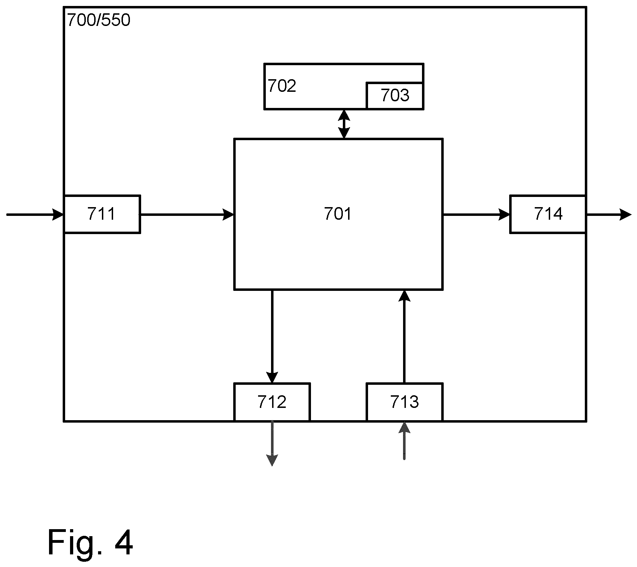

Figure 4 shows in schematic representation a control unit 700/550. The control unit 700/550 comprises a computing unit 701, which can be constituted by essentially any suitable type of processor or microcomputer, for example a circuit for digital signal processing (Digital Signal Processor, DSP), or a circuit having a predetermined specific function (Application Specific Integrated Circuit, ASIC). The computing unit 701 is connected to a memory unit 702 arranged in the control unit 700/550, which memory unit provides the computing unit 701 with, for example, the stored program code and/or the stored data which the computing unit 701 requires to be able to perform computations. The computing unit 701 is also arranged to store partial or final results of computations in the memory unit 702.

In addition, the control unit 700/550 is provided with devices 711, 712, 713, 714 for receiving and transmitting input and output signals. These input and output signals can contain waveforms, impulses, or other attributes which, by the devices 711, 713 for the reception of input signals, can be detected as information and can be converted into signals which can be processed by the computing unit 701. These signals are then made available to the computing unit 701. The devices 712, 714 for the transmission of output signals are arranged to convert signals received from the computing unit 701 in order to create output signals by, for example, modulating the signals, which can be transmitted to other parts of and/or systems in the vehicle.

Each of the connections to the devices for receiving and transmitting input and output signals can be constituted by one or more of a cable; a data bus, such as a CAN bus (Controller Area Network bus), a MOST bus (Media Orientated Systems Transport bus), or some other bus configuration; an ethernet connection; or by a suitable wireless connection. A person skilled in the art will appreciate that the above-stated computer can be constituted by the computing unit 701 and that the above- stated memory can be constituted by the memory unit 702.

Control systems in modern vehicles commonly comprise communication bus systems consisting of one or more communication buses for linking a number of electronic control units (ECU's), or controllers, and various components located on the vehicle. Such a control system can comprise a large number of control units and the responsibility for a specific function can be divided amongst more than one control unit. Vehicles of the shown type thus often comprise significantly more control units than are shown in figures 1 and 4, which is well known to the person skilled in the art within this technical field.

In a shown embodiment, the present invention may be implemented by the one or more herein mentioned control units or processing arrangements 700/550. The invention can also, however, be implemented wholly or partially in one or more other control units already present in the vehicle, or in some control unit dedicated to the present invention.

Here and in this document, control units, control entities or processing arrangements are sometimes described as being arranged for performing the methods and/or steps 210, 211, 220, 221, 230 according to the invention. This also includes that the units, entities or processing arrangements are designed to and/or configured to perform these method steps.

One or more control entities 410, 411, 420, 421, 430 may be arranged for performing the methods and/or steps. Such entities 410, 411, 420, 421, 430 may be arranged as separate entities, or may be logically separated but physically implemented in the same unit, or may be both logically and physically arranged together. These control entities 410, 411, 420, 421, 430 may for example correspond to groups of instructions, which can be in the form of programming code, that are input into, and are utilized by a processor/computing unit 701 when the entities are active and/or are utilized for performing its method steps, respectively.

The present invention is not limited to the above described embodiments. Instead, the present invention relates to, and encompasses all different embodiments being included within the scope of the independent claims.

## Claims

1. A method (200) of a control system (550) for controlling a vehicle speed v of a vehicle (500) when the vehicle (500) travels in at least one curve (620),
the method (200) comprising:
- predicting (210), when the at least one curve (620) is ahead of the vehicle (500), a reference speed v_{ref} towards which the vehicle speed v is to be controlled in the at least one curve, wherein the reference speed v_{ref} is predicted (210) based on:
-- a curvature (621) of the at least one curve (620), wherein the curvature (621) is determined (211) based on positioning information and map data; and
-- a first sensor information (591) provided by at least one first sensor (581) of the vehicle (500), wherein the first sensor information (591) indicates one or more of a first lateral road inclination and at least one first road condition experienced by the vehicle (500) in a road section (610) ahead of the at least one curve (620);
- determining (220), when the vehicle is travelling in the at least one curve (620), an adjusted reference speed v_{ref_adj} based on:
-- the predicted reference speed v_{ref}; and
-- a second sensor information (592) provided by at least one second sensor (582) of the vehicle (500), wherein the second sensor information (592) indicates a second lateral road inclination and at least one second road condition experienced by the vehicle (500) in a road section (622) of the at least one curve (620); and
- controlling (230), when the vehicle is travelling in the road section (622) of the at least one curve (620), the vehicle speed v towards the adjusted reference speed v_{ref_adj}.

2. The method (200) as claimed in claim 1, wherein each of the at least one first road condition and the at least one second road condition comprises one or more in the group of:
- a road type;
- a road quality;
- a road friction; and
- an evenness of the road.

3. The method (200) as claimed in any one of claims 1-2, wherein each of the at least one first sensor (581) and the at least one second sensor (582) comprises one or more in the group of:
- an accelerometer;
- at least one gyro sensor;
- at least one rotational speed sensor arranged on at least one wheel pair;
- at least one air suspension system sensor;
- a camera;
- a precipitation sensor; and
- a thermometer.

4. The method (200) as claimed in claim 3, wherein the at least one second sensor (582) is the same as the at least one first sensor (581).

5. The method (200) as claimed in any one of claims 1-4, wherein
- the prediction (210) of the reference speed v_{ref} is performed when the vehicle (500) is travelling in the road section (610) ahead of the at least one curve (620); and
- the road section (610) ahead of the at least one curve (620) ends with a beginning (623) of the at least one curve (620).

6. The method (200) as claimed in any one of claims 1-5, wherein
- the determination (220) of the adjusted reference speed v_{ref_adj} is performed when the vehicle (500) is travelling in the road section (622) of the at least one curve (620); and
- the road section (622) of the at least one curve (620) ends with a sharpest point (624) of the at least one curve (620).

7. The method (200) as claimed in any one of claims 1-6, wherein the determination (220) of the adjusted reference speed v_{ref_adj} comprises:
- determining (221) an adjustment factor af, which is to be multiplied with the reference speed v_{ref} to provide the adjusted reference speed v_{ref_adj}.

8. The method (200) as claimed in any one of claims 1-7, wherein one or more of the prediction (210) of the reference speed v_{ref} and the determination (220) of the adjusted reference speed v_{ref_adj} are repeatably performed with a time interval between each repetition.

9. The method (200) as claimed in claim 8, wherein the time interval has a length in the group of:
- 0.5 to 5 seconds;
- 2 seconds; and
- 1 second.

10. The method (200) as claimed in any one of claims 1-9, wherein the prediction (210) of the reference speed v_{ref} results in a lower value for the reference speed v_{ref} if the first sensor information (591) indicates one or more in the group of:
- the road section (610) ahead of the at least one curve has a lateral road inclination in an outward direction of the at least one upcoming curve (620);
- the road section (610) ahead of the at least one curve is a dirt road;
- the road section (610) ahead of the at least one curve is a gravel road;
- the road section (610) ahead of the at least one curve comprises one or more holes;
- the road section (610) ahead of the at least one curve is comprises one or more areas with reduced friction; and
- the road section (610) ahead of the at least one curve comprises one or more bumps.

11. The method (200) as claimed in any one of claims 1-10, wherein the adjusted reference speed v_{ref_adj} is determined (220) to be lower than the predicted reference speed v_{ref} if the second sensor information (592) indicates one or more in the group of:
- the road section (622) of the at least one curve (620) has a lateral road inclination in an outward direction of the at least one upcoming curve (620);
- the road section (622) of the at least one curve (620) is a dirt road;
- the road section (622) of the at least one curve (620) is a gravel road;
- the road section (622) of the at least one curve (620) comprises one or more holes;
- the road section (622) of the at least one curve (620) comprises one or more areas with reduced friction; and
- the road section (622) of the at least one curve (620) comprises one or more bumps.

12. The method (200) as claimed in any one of claims 1-10, wherein the adjusted reference speed v_{ref_adj} is determined (220) to be higher than the predicted reference speed v_{ref} if the second sensor information (592) indicates one or more in the group of:
- a lateral road inclination in an outward direction being present in the road section (610) ahead of the at least one curve (620) ceases to exist in the road section (622) of the at least one curve (620);
- a flat road section (610) ahead of the at least one curve (620) is altered to have a lateral road inclination in an inward direction in the road section (622) of the at least one curve (620);
- the road section (622) of the at least one curve (620) ceases to be a dirt road;
- the road section (622) of the at least one curve (620) ceases to be a gravel road;
- one or more holes being present in the road section (610) ahead of the at least one curve (620) ceases to exist in the road section (622) of the at least one curve (620);
- one or more areas with reduced friction being present in the road section (610) ahead of the at least one curve (620) ceases to exist in the road section (622) of the at least one curve (620); and
- one or more bumps being present in the road section (610) ahead of the at least one curve (620) ceases to exist in the road section (622) of the at least one curve (620).

13. A computer program comprising instructions which, when the program is executed by a computer, cause the computer to carry out the method according to any one of claims 1-12.

14. A computer-readable medium comprising instructions which, when executed by a computer, cause the computer to carry out the method according to any one of claims 1-12.

15. A control system (550) configured to control a vehicle speed v of a vehicle (500) when the vehicle (500) travels in at least one curve (620), wherein the control system (550) is configured to:
- predict (210), when the at least one curve (620) is ahead of the vehicle (500), a reference speed v_{ref} towards which the vehicle speed v is to be controlled in the at least one curve, wherein the reference speed v_{ref} is predicted (210) based on:
-- a curvature (621) of the at least one curve (620), wherein the curvature (621) is determined (211) based on positioning information and map data; and
-- a first sensor information (591) provided by at least one first sensor (581) of the vehicle (500), wherein the first sensor information (591) indicates one or more of a first lateral road inclination and at least one first road condition experienced by the vehicle (500) in a road section (610) ahead of the at least one curve (620);
- determine (220), when the vehicle is travelling in the at least one curve (620), an adjusted reference speed v_{ref_adj} based on:
-- the predicted reference speed v_{ref}; and
-- a second sensor information (592) provided by at least one second sensor (582) of the vehicle (500), wherein the second sensor information (592) indicates a second lateral road inclination and at least one second road condition experienced by the vehicle in a road section (622) of the at least one curve (620); and
- control (230), when the vehicle is travelling in the road section (622) of the at least one curve (620), the vehicle speed v towards the adjusted reference speed v_{ref_adj}.

16. A vehicle (500) comprising a control system (550) as claimed in claim 15.
